# EUROPEAN PATENT APPLICATION

(11) **EP 4 020 207 A1**
(43) Date of publication of application: **29.06.2022**
(21) Application number: 21209872.7
(22) Date of filing: 23.11.2021
(51) Int. Cl.: G06F 9/50

(54) **TECHNOLOGIES FOR MANAGING WORKLOADS IN PROCESSOR CORES**

(30) Priority: 24.12.2020 US 202017134056
(71) Applicant: INTEL Corporation, Santa Clara, CA 95054 (US)
(72) Inventor: MACNAMARA, Christopher, Limerick, V94X65T (IE); BROWNE, John J., Limerick, V94C44N (IE); MISRA, Amruta, 560043 Bangalore (IN); POWER, Niall, Newcastle West, V42ND88 (IE); CREMINS, David, Limerick (IE); KANTECKI, Tomasz, Ennis, Co.Clare, V95C8C0 (IE); HOUGH, Paul, Shannon, V14 AN23 (IE); MULDOON, Killian, Galway (IE)
(74) Representative: 2SPL Patentanwälte PartG mbB

(57) **Abstract**

Techniques for managing workloads in processor cores are disclosed. High priority or mission critical workloads may be assigned to processor cores of a processor. When a power limited throttling condition is met, the processor may throttle some of its cores while not throttling the cores with the high priority or mission critical workloads assigned to it. Such an approach can ensure that mission critical workloads continue even upon throttling of the processor cores.

## Description

### BACKGROUND

Servers may execute various workloads for various tenants in a multi-tenant environment. The various workloads may have different quality of service (QoS) parameters that they should comply with. When resources are limited, such as when a processor is power limited, the resources that can be provided to execute the various workloads may be limited, impacting the ability to comply with QoS requirements.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a compute device for managing workloads in processor cores;
FIG. 2 is a simplified block diagram of at least one embodiment of an environment that may be established by the compute device of FIG. 1; and
FIGS. 3-4 are a simplified flow diagram of at least one embodiment of a method for managing workloads in processor cores that may be executed by the compute device of FIG. 1.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

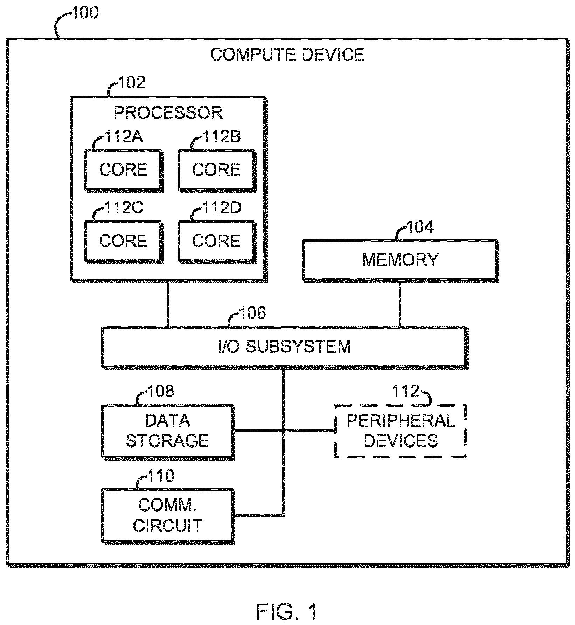

Referring now to FIG. 1, an illustrative compute device 100 is configured to manage workloads executing on processor cores 112 of a processor 102 of the compute device 100. In certain conditions, such as when a thermal design power (TDP) threshold of the processor 102 is met, the processor cores 112 may be throttled to reduce power usage, such as by reducing the operating frequency of the cores 112. The compute device 100 may select certain cores 112 that are not throttled, allowing those cores 112 to continue at a high performance level. The compute device 100 is configured to put high priority or mission critical workloads on the cores 112 that are not throttled, allowing those workloads to continue to operate within certain quality of service (QoS) requirements.

The compute device 100 may be embodied as any type of compute device. For example, the compute device 100 may be embodied as or otherwise be included in, without limitation, a server computer, an embedded computing system, a System-on-a-Chip (SoC), a multiprocessor system, a processor-based system, a consumer electronic device, a smartphone, a cellular phone, a desktop computer, a tablet computer, a notebook computer, a laptop computer, a network device, a router, a switch, a networked computer, a wearable computer, a handset, a messaging device, a camera device, a distributed computing system, and/or any other computing device. The illustrative compute device 100 includes a processor 102, a memory 104, an input/output (I/O) subsystem 106, data storage 108, a communication circuit 110, and one or more optional peripheral devices 112. In some embodiments, one or more of the illustrative components of the compute device 100 may be incorporated in, or otherwise form a portion of, another component. For example, the memory 104, or portions thereof, may be incorporated in the processor 102 in some embodiments.

In some embodiments, the compute device 100 may be located in a data center with other compute devices 100, such as an enterprise data center (e.g., a data center owned and operated by a company and typically located on company premises), managed services data center (e.g., a data center managed by a third party on behalf of a company), a colocated data center (e.g., a data center in which data center infrastructure is provided by the data center host and a company provides and manages their own data center components (servers, etc.)), cloud data center (e.g., a data center operated by a cloud services provider that host companies applications and data), and an edge data center (e.g., a data center, typically having a smaller footprint than other data center types, located close to the geographic area that it serves).

The processor 102 may be embodied as any type of processor capable of performing the functions described herein. For example, the processor 102 may be embodied as a single or multi-core processor(s), a single or multi-socket processor, a digital signal processor, a graphics processor, a neural network compute engine, an image processor, a microcontroller, or other processor or processing/controlling circuit. The illustrative processor 102 includes multiple processor cores 112, such as processor core 112A, processor core 112B, processor core 112C, and processor core 112D, as shown in FIG. 1. In the illustrative embodiment, the various processor cores 112 of the processor 102 may be assigned different priority levels. In the illustrative embodiment, the priority levels may be embodied as certain pre-defined profiles of the cores 112. In other embodiments, the priority levels may be embodied as a specified frequency or voltage that should be provided by the core 112 under certain conditions. The priority levels of the cores 112 may be controlled by a hardware setting, a firmware setting, or a software setting, such as a setting of an orchestrator. In some embodiments, the processor 102 may be compatible with or include an implementation of Intel^{®} Select Support Technology (SST), such as Intel^{®} SST Core Power (SST-CP), Intel^{®} SST Base Frequency (SST-BF), and/or Intel^{®} SST Turbo Frequency (SST-TF). The processor 102 may include any suitable number of cores 112, such as any number from 2-1,024.

The processor 102 is configured to throttle the cores 112 when certain power limited throttling conditions are met. A power limit throttling condition may be met when, e.g., a thermal design power (TDP) of the processor 102 is met, when intensity of the workloads running on the cores 112 of the processor 102 consumes the maximum power for a given processor 102, when environmental conditions increase the temperature of the processor 102, processor core 112, or other component of the compute device 102 crosses above a threshold, when a power usage of the processor 102 crosses a threshold, when a power of the compute device 102 crosses a threshold, etc. The processor 102 is then configured to limit power used by the cores 112 and throttles the processor 102 by lowering the frequency and/or voltage of the cores 112. In the illustrative embodiment, the parameters of power usage (such as frequency and voltage) of each core 112 may be controlled independently of each other core 112. In other embodiments, some cores 112 may be capable of being controlled independently of another group of cores. For example, some cores 112 may be able to be configured to continue operating at a higher frequency when the rest of the cores 112 are throttled. In some embodiments, a core 112 may be reconfigured to be throttled or not be throttled while other cores 112 are being throttled.

The memory 104 may be embodied as any type of volatile or non-volatile memory or data storage capable of performing the functions described herein. In operation, the memory 104 may store various data and software used during operation of the compute device 100 such as operating systems, applications, programs, libraries, and drivers. The memory 104 is communicatively coupled to the processor 102 via the I/O subsystem 106, which may be embodied as circuitry and/or components to facilitate input/output operations with the processor 102, the memory 104, and other components of the compute device 100. For example, the I/O subsystem 106 may be embodied as, or otherwise include, memory controller hubs, input/output control hubs, firmware devices, communication links (e.g., point-to-point links, bus links, wires, cables, light guides, printed circuit board traces, etc.) and/or other components and subsystems to facilitate the input/output operations. The I/O subsystem 106 may connect various internal and external components of the compute device 100 to each other with use of any suitable connector, interconnect, bus, protocol, etc., such as an SoC fabric, PCIe^{®}, USB2, USB3, USB4, NVMe^{®}, Thunderbolt^{®}, and/or the like. In some embodiments, the I/O subsystem 106 may form a portion of a system-on-a-chip (SoC) and be incorporated, along with the processor 102, the memory 104, and other components of the compute device 100 on a single integrated circuit chip.

The data storage 108 may be embodied as any type of device or devices configured for the short-term or long-term storage of data. For example, the data storage 108 may include any one or more memory devices and circuits, memory cards, hard disk drives, solid-state drives, or other data storage devices.

The communication circuit 110 may be embodied as any type of interface capable of interfacing the compute device 100 with other compute devices, such as over one or more wired or wireless connections. In some embodiments, the communication circuit 110 may be capable of interfacing with any appropriate cable type, such as an electrical cable or an optical cable. The communication circuit 110 may be configured to use any one or more communication technology and associated protocols (e.g., Ethernet, Bluetooth^{®}, Wi-Fi^{®}, WiMAX, near field communication (NFC), etc.). The communication circuit 110 may be located on silicon separate from the processor 102, or the communication circuit 110 may be included in a multi-chip package with the processor 102, or even on the same die as the processor 102. The communication circuit 110 may be embodied as one or more add-in-boards, daughtercards, network interface cards, controller chips, chipsets, specialized components such as a field programmable gate array (FPGA) or application specific integrated circuit (ASIC), or other devices that may be used by the compute device 102 to connect with another compute device. In some embodiments, communication circuit 110 may be embodied as part of a system-on-a-chip (SoC) that includes one or more processors, or included on a multichip package that also contains one or more processors. In some embodiments, the communication circuit 110 may include a local processor (not shown) and/or a local memory (not shown) that are both local to the communication circuit 110. In such embodiments, the local processor of the communication circuit 110 may be capable of performing one or more of the functions of the processor 102 described herein. Additionally or alternatively, in such embodiments, the local memory of the communication circuit 110 may be integrated into one or more components of the compute device 102 at the board level, socket level, chip level, and/or other levels.

In some embodiments, the compute device 100 may include other or additional components, such as those commonly found in a compute device. For example, the compute device 100 may also have peripheral devices 112, such as a keyboard, a mouse, a speaker, a microphone, a display, a camera, a battery, an external storage device, etc.

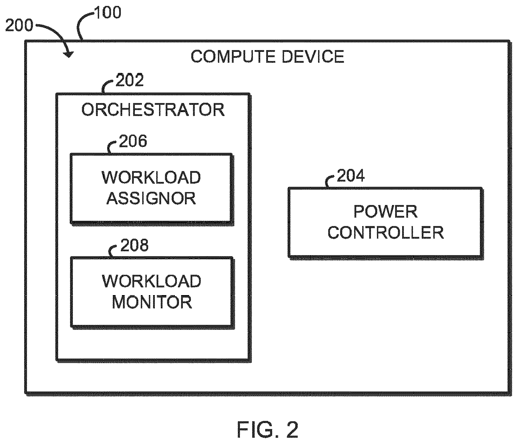

Referring now to FIG. 2, in an illustrative embodiment, the compute device 100 establishes an environment 200 during operation. The illustrative environment 200 includes an orchestrator 202 and a power controller 204. The various modules of the environment 200 may be embodied as hardware, software, firmware, or a combination thereof. For example, the various modules, logic, and other components of the environment 200 may form a portion of, or otherwise be established by, the processor 102 or other hardware components of the compute device 100 such as the memory 104, the data storage 108, etc. As such, in some embodiments, one or more of the modules of the environment 200 may be embodied as circuitry or collection of electrical devices (e.g., orchestrator circuitry 202, power controller circuitry 204, etc.). It should be appreciated that, in such embodiments, one or more of the circuits (e.g., the orchestrator circuitry 202, the power controller circuitry 204, etc.) may form a portion of one or more of the processor 102, the memory 104, the I/O subsystem 106, the data storage 108, and/or other components of the compute device 100. For example, in some embodiments, some or all of the modules may be embodied as the processor 102 as well as the memory 102 and/or data storage 108 storing instructions to be executed by the processor 102. Additionally, in some embodiments, one or more of the illustrative modules may form a portion of another module and/or one or more of the illustrative modules may be independent of one another. Further, in some embodiments, one or more of the modules of the environment 200 may be embodied as virtualized hardware components or emulated architecture, which may be established and maintained by the processor 102 or other components of the compute device 100. It should be appreciated that some of the functionality of one or more of the modules of the environment 200 may require a hardware implementation, in which case embodiments of modules which implement such functionality will be embodied at least partially as hardware.

The orchestrator 202, which may be embodied as hardware, firmware, software, virtualized hardware, emulated architecture, and/or a combination thereof as discussed above, is configured to orchestrate workloads on the compute device 100. In some embodiments, the compute device 100 may be embodied as a distributed or disaggregated computing system, and the orchestrator 202 may be partially or wholly located on a different device from the processor cores 112 that are being throttled. In some embodiments, the orchestrator 202 may be embodied as software running on an operating system. Additionally or alternatively, in some embodiments, some or all of the orchestrator 202 may be embodied as an operating system one or more compute devices 100. The illustrative orchestrator 202 includes a workload assignor 206 and a workload monitor 208. In some embodiments, the orchestrator 202 may include resource orchestration systems such as Kubernetes and OpenStack as well as types of management entities, such as an SDN Controller, VNF Management entity (VNFM), or local management controller

In the illustrative embodiment, the orchestrator 202 may perform discovery on various components of the compute device 100, such the number of processors 102, the number of cores 112 on each processor 102, the capability of each core 112 and/or processor 102, etc. For example, in the illustrative embodiment, the orchestrator 202 may discover the capabilities of the cores 112 to be throttled, such as by setting a power priority, setting a voltage, setting a frequency, etc. In some embodiments, the orchestrator 202 may be configured to automatically make adjustments when a violation of a service level agreement (SLA) is violated.

The workload assignor 206 is configured to receive workloads to be performed by the compute device 100. The workload assignor 206may receive the workload in any suitable manner, such as by receiving a workload from a remote compute device, accessing a workload in local data storage 108, receiving a workload from a user, etc. The workload may be any suitable workload, such as a network function virtualization (NFV) workload, a micro service, a container, a data processing workload, a signal processing workload, a data plane workload, a control plane workload, etc.

The workload assignor 206 may receive a workload priority associated with each workload. The workload priority may be embodied as, e.g., a number indicating a priority, a profile indicating multiple parameters associated with a workload priority, etc. The workload assignor 206may receive QoS parameters as part of receiving the workload priority. The QoS parameters may indicate certain performance or telemetry metrics that the workload should achieve. For example, for a workload related to network functions, the QoS parameters may indicate an average or threshold time latency for processing a packet, an average or threshold percentage of packets dropped, an average or threshold bandwidth available, etc. In some embodiments, the QoS parameters may be based on a service level agreement.

It should be appreciated that, in the illustrative embodiment, the workload assignor 206 receive multiple workloads relating to multiple different tenants. Workloads, such as workloads from different tenants, may be received, performed, and completed at any suitable time and are not necessarily all received at the same time.

After a workload is received, the workload assignor 206assigns the workload to a core 112 of a processor 102 of the compute device 100. The workload assignor 206 may set a core power priority of the core 112 that the workload is assigned to based on the workload priority or QoS parameters of the workload. In some embodiments, the core power priority may indicate when to enable a turbo mode of the processor core 112, in which case the frequency of the processor core 112 is increased from a baseline frequency to a turbo frequency. Additionally or alternatively, in some embodiments, the workload assignor 206 may assign the workload to a core 112 based on the current power priority of the core 112.

While a workload is being performed, the workload monitor 208 monitors performance of workloads on the cores 112. The workload monitor 208 may monitor the cores for any suitable behavior, such as cache usage, core usage, memory bandwidth, etc. In the illustrative embodiment, the workload monitor 208 monitors the performance of some or all of the workloads based on a comparison to one or more QoS parameters associated with the workload. For example, for a workload related to network functions, the workload monitor 208 may monitor an average or threshold time latency for processing a packet, an average or threshold percentage of packets dropped, an average or threshold bandwidth available, etc.

The workload monitor 208 may generate or use various telemetry metrics in order to perform such a comparison. The workload monitor 208 may determine whether, e.g., a parameter of the workload is above or below a threshold that indicates the workload should be on a processor core 112 with more or less throttling.

In some cases, the workload monitor 208 may determine that a workload should be on a core 112 with a different configuration, such as a different amount of throttling. In the illustrative embodiment, if the workload is not currently meeting QoS requirements, then the workload monitor 208 may determine that the workload should be on a processor core 112 with less or no throttling. In some embodiments, if the workload is currently meeting QoS requirements, such as meeting QoS requirements by at least a threshold amount, the workload monitor 208 may determine that the workload should be on a processor core 112 with more throttling.

To implement such a change, the workload monitor 208 may assign a workload to a different core 112 or change a configuration of the core 112 the workload is currently executing on. For example, the workload monitor 208 may assign a higher power priority to the current core 112 of the workload. Assigning such a higher power priority may be done in any suitable manner, such as by changing a hardware, firmware, or software setting associated with the processor 102 or processor core 112. The assignment of the higher power priority may automatically configure the core 112 to begin operating with higher power, such as a higher frequency or voltage. In some embodiments, the workload monitor 208 may configure the core 112 with the workload to operate in a turbo mode, with a turbo frequency higher than a baseline frequency.

In another example, the workload monitor 208 may reassign the workload to a new non- or less-throttled core 112. The workload monitor 208 may also reassign one or more additional workloads away from the new core 112 in order to free up resources for the workload being assigned to the new core 112.

In some embodiments, the workload monitor 208 may assign a lower power priority to other cores 112 of the processor 102. For example, the processor 102 may have a fixed number of cores 112 that can be assigned a high power priority, and the core 112 associated with the workload may need to be assigned a high power priority. In such an embodiment, one of the other cores 112 assigned a high power priority may be reassigned to a lower priority to free up a slot for the core 112 associated with the workload to have its power priority increased.

It should be appreciated that, in some embodiments, the workload may be assigned to a core 112 in a different processor 102. It should further be appreciated that, in some embodiments, a workload may be reassigned to a core 112 with a lower power priority or a power priority of the core 112 associated with the workload move may be lowered. For example, if the workload was previously performing below that required by a QoS parameter, it may be reassigned to a core 112 with a higher power priority. If the workload subsequently performs above the level required by a QoS parameter, such as at least a threshold amount above the level required, the workload may be reassigned to a core 112 with a lower power priority.

The power controller 204, which may be embodied as hardware, firmware, software, virtualized hardware, emulated architecture, and/or a combination thereof as discussed above, is configured to controller power usage of the compute device 100. In particular, in the illustrative embodiment, the power controller 204 is configured to throttle power used by the cores 112 of the processor 102. To do so, the power controller 204 determines whether a power limited throttling condition is met. The power limited throttling condition being met indicates that power throttling of the cores 112 should or must occur. A power limited throttling condition may be met when, e.g., a thermal design power (TDP) of the processor 102 is met, when a temperature of the processor 102, processor core 112, or other component of the compute device 102 crosses a threshold, when a power usage of the processor 102 crosses a threshold, when a power of the compute device 102 crosses a threshold, etc. The power controller 204 may compare a temperature to a threshold value in order to determine whether a power limited throttling condition is met.

When a power limited throttling condition is met, the power controller 204 throttles power to the cores 112 of the processor 102. The power controller 204 may throttle the power by, e.g., lowering an operating frequency of some of the cores 112 or lowering an operating voltage of some of the cores 112. In the illustrative embodiment, the power controller 204 may throttle each of different cores 112 by an amount specific to that core 112. The power controller 204 may throttle cores 112 to one of a pre-determined number of operating modes, such as specific voltage and frequency combinations. In other embodiments, the power controller 204 may throttle a core 112 to any suitable combination of voltage and/or frequency. In the illustrative embodiment, the processor 102 automatically implements throttling when a power limited throttling condition is met. For example, each core 112 may have a setting indicating whether it should be throttled when a power limited throttling condition is met. In such an embodiment, which cores 112 the processor 102 should throttle may be determined prior to throttling, such as by configuring a hardware setting, a firmware setting, or a software setting. For example, the setting indicating whether a core 112 should be throttled when a power limited throttling condition is met may be the core power priority.

The power controller 204 may throttle the power of the cores 112 based on a power priority of the cores 112. Additionally or alternatively, in some embodiments, the power controller 204 may throttle power to each core 112 based on the priority or QoS parameters of one or more workloads executing on each core. For example, if a high priority or mission critical workload is executing on a core 112, the power controller 204 may throttle power to other cores 112 but not the core 112 with the high priority or mission critical workload. In some embodiments, one or more cores 112 with high priority or mission critical workloads may have a turbo engaged before or after throttling power to other cores 112.

While the power controller 204 is throttling the cores 112, the power controller 204 may also change which cores 112 are being throttled. For example, the orchestrator 202 may change a configuration setting of a core 112, and the power controller 204 may react accordingly. For example, in one embodiment, the power controller 204 may decrease or remove throttling of one core 112 while increasing or starting throttling on another core 112.

When throttling is enabled, the power controller 204 monitors for whether a power throttling end condition has been met. The power throttling end condition may be met when, e.g., power usage of the processor 102 is at least a threshold amount below a thermal design power of the processor 102 is met, when a temperature of the processor 102, processor core 112, or other component of the compute device 102 crosses below a threshold, when a power usage of the processor 102 crosses below a threshold, when a power of the compute device 102 crosses below a threshold, etc.

When the power throttling end condition is met, the power controller 204 ends throttling of the cores 112. When power throttling is ended, the frequency and/or voltage of each core 112 may return to a baseline level. It should be appreciated that in some embodiments, the baseline level for different cores 112 may be different.

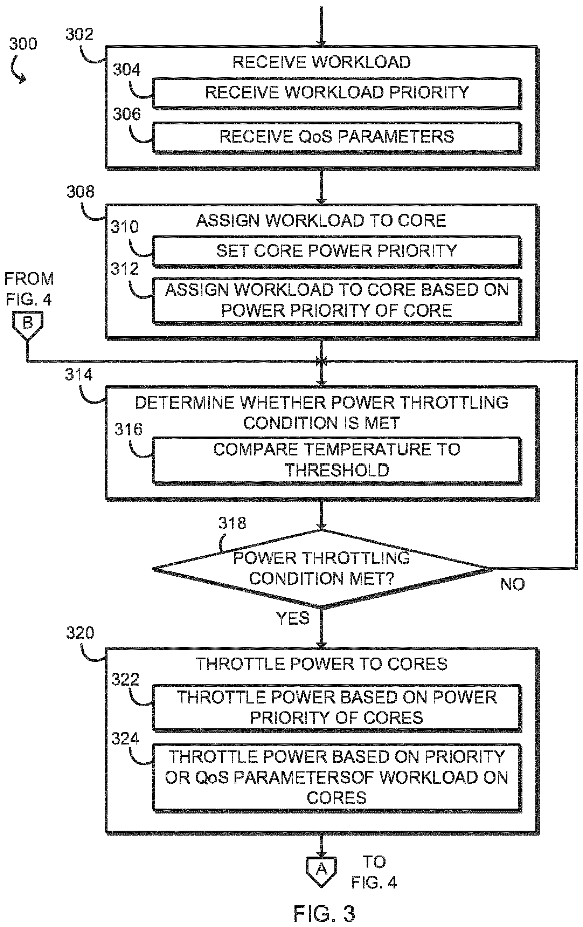

Referring now to FIG. 3, in use, the compute device 100 may execute a method 300 for managing workloads in processor cores. The method 300 may be executed by any suitable component or combination of components of the compute device 100, including hardware, software, firmware, etc. For example, some or all of the method 300 may be performed by the processor 102, the memory 104, the orchestrator 202, the power controller 204, etc. The method 300 begins in block 302, in which the compute device 100 receives a workload to be performed by the compute device 100. The compute device 100 may receive the workload in any suitable manner, such as by receiving a workload from a remote compute device, accessing a workload in local data storage 108, receiving a workload from a user, etc. The workload may be any suitable workload, such as a network function virtualization (NFV) workload, a virtual machine or container in a micro service deployment, a data processing workload, a signal processing workload, a data plane workload, a control plane workload, etc.

The compute device 100 receives a workload priority in block 304. The workload priority may be embodied as, e.g., a number indicating a priority, a profile indicating multiple parameters associated with a workload priority, etc. The compute device 100 receives QoS parameters in block 306. The QoS parameters may indicate certain performance or telemetry metrics that the workload should achieve. For example, for a workload related to network functions, the QoS parameters may indicate an average or threshold time latency for processing a packet, an average or threshold percentage of packets dropped, an average or threshold bandwidth available, etc. In some embodiments, the workload priority information may be embodied as QoS parameters.

It should be appreciated that, in the illustrative embodiment, the compute device 100 may receive multiple workloads relating to multiple different tenants. The workloads may be received at any time and are not necessarily all received in block 302.

In block 308, the compute device 100 assigns the received workload to a core 112 of a processor 102 of the compute device 100. In block 310, the compute device 100 may set a core power priority of the core 112 that the workload is assigned to based on the workload priority or QoS parameters of the workload. In some embodiments, the core power priority may indicate when to enable a turbo mode of the processor core 112, in which case the frequency of the processor core 112 is increased from a baseline value. Additionally or alternatively, in some embodiments, the compute device 100 may assign the workload to a core 112 based on the current power priority of the core 112.

In block 314, the compute device 102 determines whether a power limited throttling condition is met. The power limited throttling condition being met indicates that throttling of the cores 112 should or must occur. A power limited throttling condition may be met when, e.g., a thermal design power (TDP) of the processor 102 is met, when a temperature of the processor 102, processor core 112, or other component of the compute device 102 crosses a threshold, when a power usage of the processor 102 crosses a threshold, when a power of the compute device 102 crosses a threshold, etc. In block 316, the compute device 102 may compare a temperature to a threshold value in order to determine whether a power limited throttling condition is met.

In block 318, if the power limited throttling condition is not met, the method 300 loops back to block 314 to check whether the power limited throttling condition is met. If the power limited throttling condition is met, the method 300 proceeds to block 320, in which the compute device 100 throttles power to the cores 112 of the processor 102. The compute device 100 may throttle the power by, e.g., lowering an operating frequency of some of the cores 112 or lowering an operating voltage of some of the cores 112. In the illustrative embodiment, the compute device 100 may throttle each of different cores 112 by an amount specific to that core 112. The compute device 100 may throttle cores 112 to one of a pre-determined number of operating modes, such as specific voltage and frequency combinations. In other embodiments, the compute device 100 may throttle a core 112 to any suitable combination of voltage and/or frequency. In the illustrative embodiment, the processor 102 automatically implements throttling when a power limited throttling condition is met. In such an embodiment, which cores 112 the processor 102 should throttle may be determined prior to throttling, such as by configuring a hardware setting, a firmware setting, or a software setting.

In block 322, the compute device 100 may throttle the power of the cores 112 based on a power priority of the cores 112, such as a power priority set in block 310. In block 324, the compute device 100 may throttle power to each core 112 based on the priority or QoS parameters of one or more workloads executing on each core. For example, if a high priority or mission critical workload is executing on a core 112, the compute device 100 may throttle power to other cores 112 but not the core 112 with the high priority or mission critical workload. In some embodiments, one or more cores 112 with high priority or mission critical workloads may have a turbo engaged before or after throttling power to other cores 112.

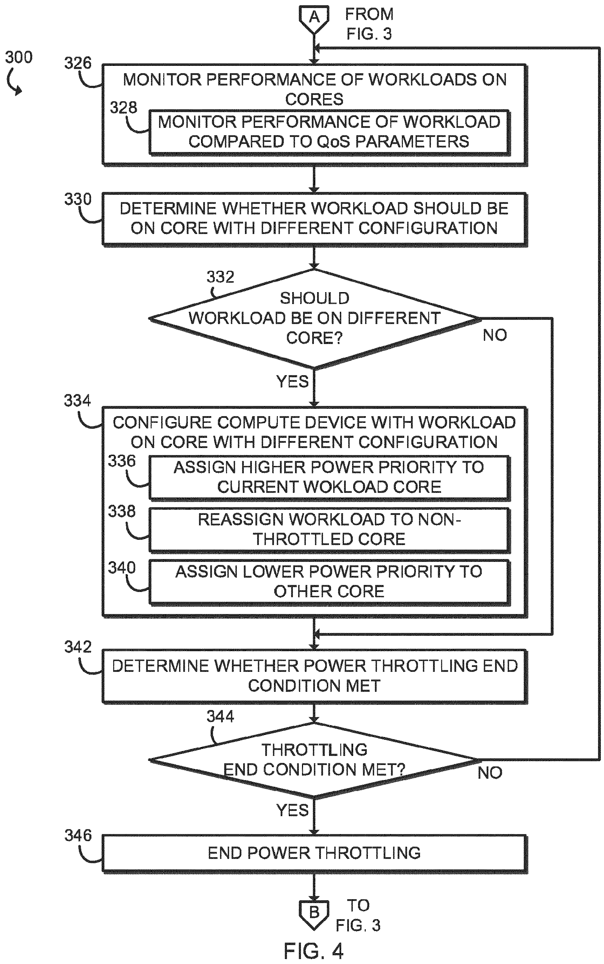

Referring now to FIG. 4, in block 326, the compute device 100 monitors performance of workloads on the cores 112. The compute device 100 may monitor the cores for any suitable behavior, such as cache usage, core usage, memory bandwidth, etc. In the illustrative embodiment, in block 328, the compute device 100 monitors the performance of some or all of the workloads based on a comparison to one or more QoS parameters associated with the workload. The compute device 100 may generate or use various telemetry metrics in order to perform such a comparison. The compute device 100 may determine whether, e.g., a parameter of the workload is above or below a threshold that indicates the workload should be on a processor core 112 with more or less throttling.

In block 330, the compute device 100 determines whether the workload should be on a core 112 with a different configuration, such as a different amount of throttling. In the illustrative embodiment, if the workload is not currently meeting QoS requirements, then the compute device 100 may determine that the workload should be on a processor core 112 with less or no throttling. In some embodiments, if the workload is currently meeting QoS requirements, such as meeting QoS requirements by at least a threshold amount, the compute device 100 may determine that the workload should be on a processor core 112 with more throttling.

In block 332, if the workload should not be on a different core, the method 300 jumps to block 342 to determine whether a power throttling end condition is met. If the workload should be on a different core, the method 300 proceeds to block 334 to configure the compute device 100 with the workload on a core 112 with a different configuration. It should be appreciated that, to do so, the compute device 100 may assign the workload to a different core 112 or change a configuration of the core 112 the workload is currently executing on. For example, in block 336, the compute device 100 may assign a higher power priority to the current core 112 of the workload. Assigning such a higher power priority may be done in any suitable manner, such as by changing a hardware, firmware, or software setting associated with the processor 102 or processor core 112. The assignment of the higher power priority may automatically configure the core 112 to begin operating with higher power, such as a higher frequency or voltage. In some embodiments, the compute device 100 may configure the core 112 with the workload to operate in a turbo mode, with a frequency higher than a baseline frequency.

In another example, the compute device 100 may reassign the workload to a new non- or less-throttled core 112 in block 338. In some embodiments, the compute device 100 may reassign the workload to a non- or less-throttled core 112 on a different processor 102, which may be collocated with the rest of the compute device 100 or may be located remotely such as, e.g., on a different rack of a data center. The compute device 100 may also reassign one or more additional workloads away from the new core 112 in order to free up resources for the workload being assigned to the new core 112.

In some embodiments, the compute device 100 may assign a lower power priority to other cores 112 of the processor 102. For example, the compute device 100 may have a fixed number of cores 112 that can be assigned a high power priority, and the core 112 associated with the workload may need to be assigned a high power priority. In such an embodiment, one of the other cores 112 assigned a high power priority may be reassigned to a lower priority to free up a slot for the core 112 associated with the workload to have its power priority increased.

It should be appreciated that, in some embodiments, the workload may be assigned to a core 112 in a different processor 102. It should further be appreciated that, in some embodiments, a workload may be reassigned to a core 112 with a lower power priority or a power priority of the core 112 associated with the workload move may be lowered. For example, if the workload was previously performing below that required by a QoS parameter, it may be reassigned to a core 112 with a higher power priority. If the workload subsequently performs above the level required by a QoS parameter, such as at least a threshold amount above the level required, the workload may be reassigned to a core 112 with a lower power priority.

In block 342, the compute device 102 determines whether a power throttling end condition has been met. The power throttling end condition may be met when, e.g., power usage of the processor 102 is at least a threshold amount below a thermal design power of the processor 102 is met, when a temperature of the processor 102, processor core 112, or other component of the compute device 102 crosses below a threshold, when a power usage of the processor 102 crosses below a threshold, when a power of the compute device 102 crosses below a threshold, etc.

In block 344, if the power throttling end condition is not met, the method 300 loops back to block 326 to continue monitoring the performance of workloads. If the power throttling end condition is met, the method 300 continues to block 346, in which the power throttling is ended. When power throttling is ended, the frequency and/or voltage of each core 112 may return to a baseline level. It should be appreciated that in some embodiments, the baseline level for different cores 112 may be different. The method 300 then loops back to block 314 in FIG. 3 to determine whether a power limited throttling condition is met.

### EXAMPLES

Illustrative examples of the technologies disclosed herein are provided below. An embodiment of the technologies may include any one or more, and any combination of, the examples described below.

Example 1 includes a compute device for management of workloads, the compute device comprising orchestrator circuitry to receive a workload to be performed by the compute device; determine a priority of the workload to be performed; and assign the workload to a core of a plurality of cores of a processor of the compute device; and power controller circuitry to determine that a power limited throttling condition has been met; in response to a determination that the power limited throttling condition has been met, select, based on the priority of the workload, some of the cores of the plurality of cores to be throttled and some of the cores of the plurality of cores not to be throttled; and throttle the cores of the plurality of cores selected to be throttled and not throttling the cores of the plurality of cores selected not to be throttled.

Example 2 includes the subject matter of Example 1, and wherein the orchestrator circuitry is further to set a core power priority of the core that the workload is assigned to based on the priority of the workload, wherein to select, based on the priority of the workload, some of the cores of the plurality of cores to be throttled and some of the cores of the plurality of cores not to be throttled comprises to select, based on the core power priority of the core that the workload is assigned to, some of the cores of the plurality of cores to be throttled and some of the cores of the plurality of cores not to be throttled.

Example 3 includes the subject matter of any of Examples 1 and 2, and wherein the priority of the workload is a high priority, wherein the core power priority of the core is a high core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to not to be throttled.

Example 4 includes the subject matter of any of Examples 1-3, and wherein the priority of the workload is a low priority, wherein the core power priority of the core is a low core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to to be throttled.

Example 5 includes the subject matter of any of Examples 1-4, and wherein the orchestrator circuitry is further to determine a core power priority of each of the plurality of cores, wherein to assign the workload to the core comprises to assign the workload to the core based on the priority of the workload and the core power priority of the core, wherein to select, based on the priority of the workload, some of the cores of the plurality of cores to be throttled and some of the cores of the plurality of cores not to be throttled comprises to select, based on the core power priority of the core that the workload is assigned to, some of the cores of the plurality of cores to be throttled and some of the cores of the plurality of cores not to be throttled.

Example 6 includes the subject matter of any of Examples 1-5, and wherein the priority of the workload is a high priority, wherein the core power priority of the core is a high core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to not to be throttled.

Example 7 includes the subject matter of any of Examples 1-6, and wherein the priority of the workload is a low priority, wherein the core power priority of the core is a low core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to to be throttled.

Example 8 includes the subject matter of any of Examples 1-7, and wherein the orchestrator circuitry is further to monitor a performance of the workload during throttling of the cores of the plurality of cores selected to be throttled, wherein the core that the workload is assigned to is a throttled core; determine that the workload should be on a non-throttled core based on the performance of the workload; reassign the workload from a throttled core to a non-throttled core.

Example 9 includes the subject matter of any of Examples 1-8, and wherein the orchestrator circuitry is further to monitor a performance of the workload during throttling of the cores of the plurality of cores selected to be throttled, wherein the core that the workload is assigned to is a throttled core; determine that the workload should be on a non-throttled core based on the performance of the workload; change the core that the workload is assigned to to be a non-throttled core.

Example 10 includes the subject matter of any of Examples 1-9, and wherein to set the core that the workload is assigned to to be a non-throttled core comprises to change a second core from a non-throttled core to a throttled core.

Example 11 includes the subject matter of any of Examples 1-10, and wherein to monitor the performance of the workload during throttling of the cores of the plurality of cores selected to be throttled comprises to monitor a quality of service (QoS) parameters of the workload during throttling of the cores of the plurality of cores selected to be throttled.

Example 12 includes the subject matter of any of Examples 1-11, and wherein to throttle the cores of the plurality of cores selected to be throttled and not throttling the cores of the plurality of cores selected not to be throttled comprises to operate the core that the workload is assigned to at a turbo frequency.

Example 13 includes a method for managing workloads on a compute device, the method comprising receiving, by the compute device, a workload to be performed by the compute device; determining, by the compute device, a priority of the workload to be performed; assigning, by the compute device, the workload to a core of a plurality of cores of a processor of the compute device; determining, by the compute device, that a power limited throttling condition has been met; in response to a determination that the power limited throttling condition has been met, selecting, by the compute device and based on the priority of the workload, some of the cores of the plurality of cores to be throttled and some of the cores of the plurality of cores not to be throttled; and throttling, by the compute device, the cores of the plurality of cores selected to be throttled and not throttling the cores of the plurality of cores selected not to be throttled.

Example 14 includes the subject matter of Example 13, and further including setting a core power priority of the core that the workload is assigned to based on the priority of the workload, wherein selecting, based on the priority of the workload, some of the cores of the plurality of cores to be throttled and some of the cores of the plurality of cores not to be throttled comprises selecting, based on the core power priority of the core that the workload is assigned to, some of the cores of the plurality of cores to be throttled and some of the cores of the plurality of cores not to be throttled.

Example 15 includes the subject matter of any of Examples 13 and 14, and wherein the priority of the workload is a high priority, wherein the core power priority of the core is a high core power priority, wherein selecting, based on the core power priority of the core that the workload is assigned to, some of the cores of the plurality of cores to be throttled and some of the cores of the plurality of cores not to be throttled comprises selecting, based on the core power priority of the core that the workload is assigned to, the core that the workload is assigned to not to be throttled.

Example 16 includes the subject matter of any of Examples 13-15, and wherein the priority of the workload is a low priority, wherein the core power priority of the core is a low core power priority, wherein selecting, based on the core power priority of the core that the workload is assigned to, some of the cores of the plurality of cores to be throttled and some of the cores of the plurality of cores not to be throttled comprises selecting, based on the core power priority of the core that the workload is assigned to, the core that the workload is assigned to to be throttled.

Example 17 includes the subject matter of any of Examples 13-16, and further including determining a core power priority of each of the plurality of cores, wherein assigning the workload to the core comprises assigning the workload to the core based on the priority of the workload and the core power priority of the core, wherein selecting, based on the priority of the workload, some of the cores of the plurality of cores to be throttled and some of the cores of the plurality of cores not to be throttled comprises selecting, based on the core power priority of the core that the workload is assigned to, some of the cores of the plurality of cores to be throttled and some of the cores of the plurality of cores not to be throttled.

Example 18 includes the subject matter of any of Examples 13-17, and wherein the priority of the workload is a high priority, wherein the core power priority of the core is a high core power priority, wherein selecting, based on the core power priority of the core that the workload is assigned to, some of the cores of the plurality of cores to be throttled and some of the cores of the plurality of cores not to be throttled comprises selecting, based on the core power priority of the core that the workload is assigned to, the core that the workload is assigned to not to be throttled.

Example 19 includes the subject matter of any of Examples 13-18, and wherein the priority of the workload is a low priority, wherein the core power priority of the core is a low core power priority, wherein selecting, based on the core power priority of the core that the workload is assigned to, some of the cores of the plurality of cores to be throttled and some of the cores of the plurality of cores not to be throttled comprises selecting, based on the core power priority of the core that the workload is assigned to, the core that the workload is assigned to to be throttled.

Example 20 includes the subject matter of any of Examples 13-19, and further including monitoring, by the compute device, a performance of the workload during throttling of the cores of the plurality of cores selected to be throttled, wherein the core that the workload is assigned to is a throttled core; determining, by the compute device, that the workload should be on a non-throttled core based on the performance of the workload; reassigning the workload from a throttled core to a non-throttled core.

Example 21 includes the subject matter of any of Examples 13-20, and further including monitoring, by the compute device, a performance of the workload during throttling of the cores of the plurality of cores selected to be throttled, wherein the core that the workload is assigned to is a throttled core; determining, by the compute device, that the workload should be on a non-throttled core based on the performance of the workload; changing the core that the workload is assigned to to be a non-throttled core.

Example 22 includes the subject matter of any of Examples 13-21, and wherein setting the core that the workload is assigned to to be a non-throttled core comprises changing a second core from a non-throttled core to a throttled core.

Example 23 includes the subject matter of any of Examples 13-22, and wherein monitoring the performance of the workload during throttling of the cores of the plurality of cores selected to be throttled comprises monitoring a quality of service (QoS) parameters of the workload during throttling of the cores of the plurality of cores selected to be throttled.

Example 24 includes the subject matter of any of Examples 13-23, and wherein throttling, by the compute device, the cores of the plurality of cores selected to be throttled and not throttling the cores of the plurality of cores selected not to be throttled comprises operating the core that the workload is assigned to at a turbo frequency.

Example 25 includes a compute device for management of workloads, the compute device comprising means for receiving a workload to be performed by the compute device; means for determining a priority of the workload to be performed; means for assigning the workload to a core of a plurality of cores of a processor of the compute device; means for determining that a power limited throttling condition has been met; means for, in response to a determination that the power limited throttling condition has been met, selecting, based on the priority of the workload, some of the cores of the plurality of cores to be throttled and some of the cores of the plurality of cores not to be throttled; and means for throttling the cores of the plurality of cores selected to be throttled and not throttling the cores of the plurality of cores selected not to be throttled.

Example 26 includes the subject matter of Example 25, and further including means for setting a core power priority of the core that the workload is assigned to based on the priority of the workload, wherein the means for selecting, based on the priority of the workload, some of the cores of the plurality of cores to be throttled and some of the cores of the plurality of cores not to be throttled comprises means for selecting, based on the core power priority of the core that the workload is assigned to, some of the cores of the plurality of cores to be throttled and some of the cores of the plurality of cores not to be throttled.

Example 27 includes the subject matter of any of Examples 25 and 26, and wherein the priority of the workload is a high priority, wherein the core power priority of the core is a high core power priority, wherein the means for selecting, based on the core power priority of the core that the workload is assigned to, some of the cores of the plurality of cores to be throttled and some of the cores of the plurality of cores not to be throttled comprises means for selecting, based on the core power priority of the core that the workload is assigned to, the core that the workload is assigned to not to be throttled.

Example 28 includes the subject matter of any of Examples 25-27, and wherein the priority of the workload is a low priority, wherein the core power priority of the core is a low core power priority, wherein the means for selecting, based on the core power priority of the core that the workload is assigned to, some of the cores of the plurality of cores to be throttled and some of the cores of the plurality of cores not to be throttled comprises means for selecting, based on the core power priority of the core that the workload is assigned to, the core that the workload is assigned to to be throttled.

Example 29 includes the subject matter of any of Examples 25-28, and further including means for determining a core power priority of each of the plurality of cores, wherein the means for assigning the workload to the core comprises means for assigning the workload to the core based on the priority of the workload and the core power priority of the core, wherein the means for selecting, based on the priority of the workload, some of the cores of the plurality of cores to be throttled and some of the cores of the plurality of cores not to be throttled comprises means for selecting, based on the core power priority of the core that the workload is assigned to, some of the cores of the plurality of cores to be throttled and some of the cores of the plurality of cores not to be throttled.

Example 30 includes the subject matter of any of Examples 25-29, and wherein the priority of the workload is a high priority, wherein the core power priority of the core is a high core power priority, wherein the means for selecting, based on the core power priority of the core that the workload is assigned to, some of the cores of the plurality of cores to be throttled and some of the cores of the plurality of cores not to be throttled comprises means for selecting, based on the core power priority of the core that the workload is assigned to, the core that the workload is assigned to not to be throttled.

Example 31 includes the subject matter of any of Examples 25-30, and wherein the priority of the workload is a low priority, wherein the core power priority of the core is a low core power priority, wherein the means for selecting, based on the core power priority of the core that the workload is assigned to, some of the cores of the plurality of cores to be throttled and some of the cores of the plurality of cores not to be throttled comprises means for selecting, based on the core power priority of the core that the workload is assigned to, the core that the workload is assigned to to be throttled.

Example 32 includes the subject matter of any of Examples 25-31, and further including means for monitoring a performance of the workload during throttling of the cores of the plurality of cores selected to be throttled, wherein the core that the workload is assigned to is a throttled core; means for determining that the workload should be on a non-throttled core based on the performance of the workload; means for reassigning the workload from a throttled core to a non-throttled core.

Example 33 includes the subject matter of any of Examples 25-32, and further including means for monitoring a performance of the workload during throttling of the cores of the plurality of cores selected to be throttled, wherein the core that the workload is assigned to is a throttled core; means for determining that the workload should be on a non-throttled core based on the performance of the workload; means for changing the core that the workload is assigned to to be a non-throttled core.

Example 34 includes the subject matter of any of Examples 25-33, and wherein the means for setting the core that the workload is assigned to to be a non-throttled core comprises means for changing a second core from a non-throttled core to a throttled core.

Example 35 includes the subject matter of any of Examples 25-34, and wherein the means for monitoring the performance of the workload during throttling of the cores of the plurality of cores selected to be throttled comprises means for monitoring a quality of service (QoS) parameters of the workload during throttling of the cores of the plurality of cores selected to be throttled.

Example 36 includes the subject matter of any of Examples 25-35, and wherein the means for throttling the cores of the plurality of cores selected to be throttled and not throttling the cores of the plurality of cores selected not to be throttled comprises means for operating the core that the workload is assigned to at a turbo frequency.

Example 37 includes one or more computer-readable media comprising a plurality of instructions stored thereon that, when executed, causes a compute device to receive a workload to be performed by the compute device; determine a priority of the workload to be performed; assign the workload to a core of a plurality of cores of a processor of the compute device; determine that a power limited throttling condition has been met; in response to a determination that the power limited throttling condition has been met, select, based on the priority of the workload, some of the cores of the plurality of cores to be throttled and some of the cores of the plurality of cores not to be throttled; and throttle the cores of the plurality of cores selected to be throttled and not throttling the cores of the plurality of cores selected not to be throttled.

Example 38 includes the subject matter of Example 37, and wherein the plurality of instructions further causes the compute device to set a core power priority of the core that the workload is assigned to based on the priority of the workload, wherein to select, based on the priority of the workload, some of the cores of the plurality of cores to be throttled and some of the cores of the plurality of cores not to be throttled comprises to select, based on the core power priority of the core that the workload is assigned to, some of the cores of the plurality of cores to be throttled and some of the cores of the plurality of cores not to be throttled.

Example 39 includes the subject matter of any of Examples 37 and 38, and wherein the priority of the workload is a high priority, wherein the core power priority of the core is a high core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to not to be throttled.

Example 40 includes the subject matter of any of Examples 37-39, and wherein the priority of the workload is a low priority, wherein the core power priority of the core is a low core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to to be throttled.

Example 41 includes the subject matter of any of Examples 37-40, and wherein the plurality of instructions further causes the compute device to determine a core power priority of each of the plurality of cores, wherein to assign the workload to the core comprises to assign the workload to the core based on the priority of the workload and the core power priority of the core, wherein to select, based on the priority of the workload, some of the cores of the plurality of cores to be throttled and some of the cores of the plurality of cores not to be throttled comprises to select, based on the core power priority of the core that the workload is assigned to, some of the cores of the plurality of cores to be throttled and some of the cores of the plurality of cores not to be throttled.

Example 42 includes the subject matter of any of Examples 37-41, and wherein the priority of the workload is a high priority, wherein the core power priority of the core is a high core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to not to be throttled.

Example 43 includes the subject matter of any of Examples 37-42, and wherein the priority of the workload is a low priority, wherein the core power priority of the core is a low core power priority, wherein to select, based on the core power priority of the core that the workload is assigned to, some of the cores of the plurality of cores to be throttled and some of the cores of the plurality of cores not to be throttled comprises to select, based on the core power priority of the core that the workload is assigned to, the core that the workload is assigned to to be throttled.

Example 44 includes the subject matter of any of Examples 37-43, and wherein the plurality of instructions further causes the compute device to monitor a performance of the workload during throttling of the cores of the plurality of cores selected to be throttled, wherein the core that the workload is assigned to is a throttled core; determine that the workload should be on a non-throttled core based on the performance of the workload; reassign the workload from a throttled core to a non-throttled core.

Example 45 includes the subject matter of any of Examples 37-44, and wherein the plurality of instructions further causes the compute device to monitor a performance of the workload during throttling of the cores of the plurality of cores selected to be throttled, wherein the core that the workload is assigned to is a throttled core; determine that the workload should be on a non-throttled core based on the performance of the workload; change the core that the workload is assigned to to be a non-throttled core.

Example 46 includes the subject matter of any of Examples 37-45, and wherein to set the core that the workload is assigned to to be a non-throttled core comprises to change a second core from a non-throttled core to a throttled core.

Example 47 includes the subject matter of any of Examples 37-46, and wherein to monitor the performance of the workload during throttling of the cores of the plurality of cores selected to be throttled comprises to monitor a quality of service (QoS) parameters of the workload during throttling of the cores of the plurality of cores selected to be throttled.

Example 48 includes the subject matter of any of Examples 37-47, and wherein to throttle the cores of the plurality of cores selected to be throttled and not throttling the cores of the plurality of cores selected not to be throttled comprises to operate the core that the workload is assigned to at a turbo frequency.

## Claims

1. A compute device for management of workloads, the compute device comprising:
orchestrator circuitry to:
determine a priority of a workload to be performed by the compute device; and
assign the workload to a core of a plurality of cores of a processor of the compute device; and
power controller circuitry to:
determine that a power limited throttling condition has been met;
in response to a determination that the power limited throttling condition has been met, select, based on the priority of the workload, at least one of the cores of the plurality of cores to be throttled and at least one of the cores of the plurality of cores not to be throttled; and
throttle the cores of the plurality of cores selected to be throttled and not throttling the cores of the plurality of cores selected not to be throttled.

2. The compute device of claim 1, wherein the orchestrator circuitry is further to set a core power priority of the core that the workload is assigned to based on the priority of the workload,
wherein to select, based on the priority of the workload, at least one of the cores of the plurality of cores to be throttled and at least one of the cores of the plurality of cores not to be throttled comprises to select, based on the core power priority of the core that the workload is assigned to, at least one of the cores of the plurality of cores to be throttled and at least one of the cores of the plurality of cores not to be throttled.

3. The compute device of claim 2, wherein the priority of the workload is a high priority,
wherein the core power priority of the core is a high core power priority,
wherein to select, based on the core power priority of the core that the workload is assigned to, at least one of the cores of the plurality of cores to be throttled and at least one of the cores of the plurality of cores not to be throttled comprises to select, based on the core power priority of the core that the workload is assigned to, the core that the workload is assigned to not to be throttled.

4. The compute device of claim 2 or 3, wherein the priority of the workload is a low priority,
wherein the core power priority of the core is a low core power priority,
wherein to select, based on the core power priority of the core that the workload is assigned to, at least one of the cores of the plurality of cores to be throttled and at least one of the cores of the plurality of cores not to be throttled comprises to select, based on the core power priority of the core that the workload is assigned to, the core that the workload is assigned to to be throttled.

5. The compute device of one of the previous claims, wherein the orchestrator circuitry is further to determine a core power priority of each of the plurality of cores,
wherein to assign the workload to the core comprises to assign the workload to the core based on the priority of the workload and the core power priority of the core,
wherein to select, based on the priority of the workload, at least one of the cores of the plurality of cores to be throttled and at least one of the cores of the plurality of cores not to be throttled comprises to select, based on the core power priority of the core that the workload is assigned to, at least one of the cores of the plurality of cores to be throttled and at least one of the cores of the plurality of cores not to be throttled.

6. The compute device of one of the previous claims, wherein the orchestrator circuitry is further to:
monitor a performance of the workload during throttling of the cores of the plurality of cores selected to be throttled, wherein the core that the workload is assigned to is a throttled core;
determine that the workload should be on a non-throttled core based on the performance of the workload;
reassign the workload from a throttled core to a non-throttled core.

7. The compute device of one of the previous claims, wherein the orchestrator
circuitry is further to:
monitor a performance of the workload during throttling of the cores of the plurality of cores selected to be throttled, wherein the core that the workload is assigned to is a throttled core;
determine that the workload should be on a non-throttled core based on the performance of the workload;
change the core that the workload is assigned to to be a non-throttled core.

8. The compute device of one of the previous claims, wherein to monitor the performance of the workload during throttling of the cores of the plurality of cores selected to be throttled comprises to monitor a quality of service (QoS) parameters of the workload during throttling of the cores of the plurality of cores selected to be throttled.

9. A method for managing workloads on a compute device, the method comprising:
determining, by the compute device, a priority of a workload to be performed by the compute device;
assigning, by the compute device, the workload to a core of a plurality of cores of a processor of the compute device;
determining, by the compute device, that a power limited throttling condition has been met;
in response to a determination that the power limited throttling condition has been met, selecting, by the compute device and based on the priority of the workload, at least one of the cores of the plurality of cores to be throttled and at least one of the cores of the plurality of cores not to be throttled; and
throttling, by the compute device, the cores of the plurality of cores selected to be throttled and not throttling the cores of the plurality of cores selected not to be throttled.

10. The method of claim 9, further comprising setting a core power priority of the core that the workload is assigned to based on the priority of the workload,
wherein selecting, based on the priority of the workload, at least one of the cores of the plurality of cores to be throttled and at least one of the cores of the plurality of cores not to be throttled comprises selecting, based on the core power priority of the core that the workload is assigned to, at least one of the cores of the plurality of cores to be throttled and at least one of the cores of the plurality of cores not to be throttled.

11. The method of claim 10, wherein the priority of the workload is a high priority,
wherein the core power priority of the core is a high core power priority,
wherein selecting, based on the core power priority of the core that the workload is assigned to, at least one of the cores of the plurality of cores to be throttled and at least one of the cores of the plurality of cores not to be throttled comprises selecting, based on the core power priority of the core that the workload is assigned to, the core that the workload is assigned to not to be throttled.

12. The method of claim 10 or 11, wherein the priority of the workload is a low priority,
wherein the core power priority of the core is a low core power priority,
wherein selecting, based on the core power priority of the core that the workload is assigned to, at least one of the cores of the plurality of cores to be throttled and at least one of the cores of the plurality of cores not to be throttled comprises selecting, based on the core power priority of the core that the workload is assigned to, the core that the workload is assigned to to be throttled.

13. The method of one of the claims 9-12, further comprising determining a core power priority of each of the plurality of cores,
wherein assigning the workload to the core comprises assigning the workload to the core based on the priority of the workload and the core power priority of the core,
wherein selecting, based on the priority of the workload, at least one of the cores of the plurality of cores to be throttled and at least one of the cores of the plurality of cores not to be throttled comprises selecting, based on the core power priority of the core that the workload is assigned to, at least one of the cores of the plurality of cores to be throttled and at least one of the cores of the plurality of cores not to be throttled.

14. A compute device comprising means for performing the method of any of claims 9-13.

15. One or more computer-readable media comprising a plurality of instructions stored thereon that, when executed, causes a compute device to perform the method of any of claims 9-13.
